# EUROPEAN PATENT APPLICATION

(11) **EP 4 748 970 A1**
(43) Date of publication of application: **27.05.2026**
(21) Application number: 25217420.6
(22) Date of filing: 20.11.2025
(51) Int. Cl.: C23C 28/02, C22C 19/03, C22C 19/05, C22C 19/07, F01D 5/28, C23C 28/00

(54) **AIRCRAFT COMPONENT COATING SYSTEM**

(30) Priority: 20.11.2024 US 202418954011
(71) Applicant: Pratt & Whitney Canada Corp., (01BE5) Longueuil, QC J4G 1A1 (CA)
(72) Inventor: SAEED, Ata, (01BE5) Longueuil, J4G 1A1 (CA)
(74) Representative: Dehns

(57) **Abstract**

A coating system (16) for an aircraft component (18) is described herein. The component (18) includes a substrate (28) having a surface (30) for the application of the coating system (16). The coating system (16) includes a diffusion barrier coating layer (20) disposed on the substrate surface (30). A bond coating layer (22) may be disposed on the diffusion barrier coating layer (20). The diffusion barrier coating layer (20) may be formed from a first MCrAlX alloy (24), where M includes, for example, cobalt and X includes, for example, yttrium. The bond coating layer (22) may be formed from a second MCrAlX alloy (26), where M includes, for example, nickel and X includes, for example, one or more of yttrium, silicon, or hafnium. The diffusion barrier coating layer (20) and/or the bond coating layer (22) may have a microstructure that includes gamma and beta phases.

## Description

### TECHNICAL FIELD

This disclosure relates to a coating system for aircraft components, generally, and to dual layer coating systems for components in a gas turbine engine which are exposed to high temperatures, in particular.

### BACKGROUND INFORMATION

Various metallic overlay coatings or bond coatings (e.g., MCrAlY and/or aluminides) are applied to metal alloy substrates to improve the oxidation resistance of the substrate within the high temperature environment of a gas turbine engine. While these known coatings have various advantages, there is still room in the art for improvement. In particular, there is a need in the art for protective coating systems which decrease diffusion of aluminum between substrates and applied metallic overlay coatings, thereby reducing the oxidation and/or spallation life of the applied metallic overlay coating.

### SUMMARY

According to an aspect of the present disclosure, an aircraft component is provided. The aircraft component may include a substrate, a diffusion barrier coating layer, and a bond coating layer. The diffusion barrier coating layer may be disposed on a surface of the substrate. The bond coating layer may be disposed on the diffusion barrier coating layer. The diffusion barrier coating layer may include a first γ/β microstructure. The bond coating layer may include a second γ/β microstructure.

In any of the aspects or examples described above and herein, the diffusion barrier coating layer comprises a first MCrAlX alloy, wherein M comprises cobalt and X comprises yttrium. In some embodiments, M of the first MCrAlX alloy further comprises nickel.

In any of the aspects or examples described above and herein, the bond coating layer comprises a second MCrAlX alloy, wherein M comprises nickel and X comprises one or more of: yttrium, silicon, or hafnium. In some embodiments, M of the second MCrAlX alloy further comprises cobalt.

In any of the aspects or examples described above and herein, the first MCrAlX alloy comprises, by weight of the first MCrAlX alloy, from about 7.00 percent to about 9.00 percent aluminum. The first MCrAlX alloy comprises, by weight of the first MCrAlX alloy, from about 31.00 to about 33.00 percent nickel, from about 20.00 percent to about 22.00 percent chromium, from about 7.00 percent to about 9.00 percent aluminum, from about 0.35 percent to about 0.65 percent yttrium, and the balance cobalt.

In any of the aspects or examples described above and herein, the second MCrAlX alloy comprises, by weight of the second MCrAlX alloy, from about 11.00 percent to about 13.50 percent aluminum. The second MCrAlX alloy comprises, by weight of the second MCrAlX alloy, from about 20.00 percent to about 24.00 percent cobalt, from about 15.00 percent to about 19.00 percent chromium, from about 11.80 percent to about 13.20 percent aluminum, X comprising from about 0.40 percent to about 0.80 percent yttrium, and the balance nickel.

In any of the aspects or examples described above and herein, the second MCrAlX alloy comprises, by weight of the second MCrAlX alloy, from about 20.00 percent to about 24.00 percent cobalt, from about 15.00 percent to about 19.00 percent chromium, from about 11.75 percent to about 13.25 percent aluminum, from about 0.40 percent to about 0.80 percent yttrium, from about 0.20 percent to about 0.60 percent silicon, from about 0.10 percent to about 0.40 percent hafnium, and the balance nickel.

In any of the aspects or examples described above and herein, the second MCrAlX alloy further comprises, by weight of the second MCrAlX alloy, one or more of: up to about 0.02 percent carbon, up to about 0.01 percent phosphorous, up to about 0.01 percent sulfur, up to about 25 ppm lead, up to about 1ppm bismuth, up to about 400ppm oxygen, up to about 100ppm nitrogen, or up to about 50 ppm hydrogen.

The second MCrAlX alloy may further comprise, by weight of the second MCrAlX alloy, one or more of: up to about 0.02 percent carbon, up to about 0.01 percent phosphorous, up to about 0.01 percent sulfur, up to about 25 ppm lead, up to about 1ppm bismuth, up to about 400ppm oxygen, up to about 100ppm nitrogen, or up to about 50 ppm hydrogen.

In any of the aspects or examples described above and herein, the aircraft component further includes a thermal barrier coating layer disposed on the bond coating layer.

In any of the aspects or examples described above and herein, the substrate comprises a nickel-based superalloy. The substrate may comprise, by weight of the substrate, up to about 6.00 percent aluminum.

According to an aspect of the present disclosure, an aircraft component is provided. The aircraft component may include a substrate, a diffusion barrier coating layer, and a bond coating layer. The diffusion barrier coating layer may be disposed on a surface of the substrate. The bond coating layer may be disposed on the diffusion barrier coating layer. The diffusion barrier coating layer may include a first MCrAlX alloy, wherein M comprises cobalt and X comprises yttrium. The bond coating layer may include a second MCrAlX alloy, wherein M comprises nickel and X comprises one or more of: yttrium, silicon, or hafnium. The substrate comprises, by weight of the substrate, up to about 6.00 percent aluminum. The first MCrAlX alloy comprises, by weight of the first MCrAlX alloy, from about 7.00 percent to about 9.00 percent aluminum. The second MCrAlX alloy comprises, by weight of the second MCrAlX alloy, from about 11.00 percent to about 13.00 percent aluminum.

In any of the aspects or examples described above and herein, the first MCrAlX alloy further comprises, by weight of the first MCrAlX alloy, from about from about 31.00 to about 33.00 percent nickel, from about 20.00 percent to about 22.00 percent chromium, from about 0.35 percent to about 0.65 percent yttrium, and the balance cobalt. The second MCrAlX alloy further comprises, by weight of the second MCrAlX alloy, from about 20.00 percent to about 24.00 percent cobalt, from about 15.00 percent to about 19.00 percent chromium, from about 11.80 percent to about 13.20 percent aluminum, X comprising from about 0.40 percent to about 0.80 percent yttrium, and the balance nickel.

In any of the aspects or examples described above and herein, the second MCrAlX alloy further comprises, by weight of the second MCrAlX alloy, from about 20.00 percent to about 24.00 percent cobalt, from about 15.00 percent to about 19.00 percent chromium, from about 11.75 percent to about 13.25 percent aluminum, from about 0.40 percent to about 0.80 percent yttrium, from about 0.20 percent to about 0.60 percent silicon, from about 0.10 percent to about 0.40 percent hafnium, and the balance nickel.

According to an aspect of the present disclosure, a coating system for an aircraft component is provided. The coating system comprises a diffusion barrier coating layer and a bond coating layer. The diffusion barrier coating layer may be disposed adjacent a substrate, and the bond coating layer may be disposed adjacent the diffusion barrier coating layer. The diffusion barrier coating layer may include a first γ/β microstructure. The diffusion barrier coating layer may comprise a first MCrAlX alloy, wherein M comprises cobalt and X comprises yttrium. The bond coating layer may include a second γ/β microstructure. The bond coating layer may comprise a second MCrAlX alloy, wherein M of the second MCrAlX alloy comprises nickel, and X of the second MCrAlX alloy comprises one or more of yttrium, silicon, or hafnium.

In any of the aspects or examples described above and herein, the first MCrAlX alloy comprises, by weight of the first MCrAlX alloy, from about 7.00 percent to about 9.00 percent aluminum. The second MCrAlX alloy comprises, by weight of the first MCrAlX alloy, from about 11.00 percent to about 13.00 percent aluminum.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic view of an aircraft component, according to an embodiment of the present disclosure.
FIG. 2 is a schematic view of an aircraft component, according to an embodiment of the present disclosure.

### DETAILED DESCRIPTION

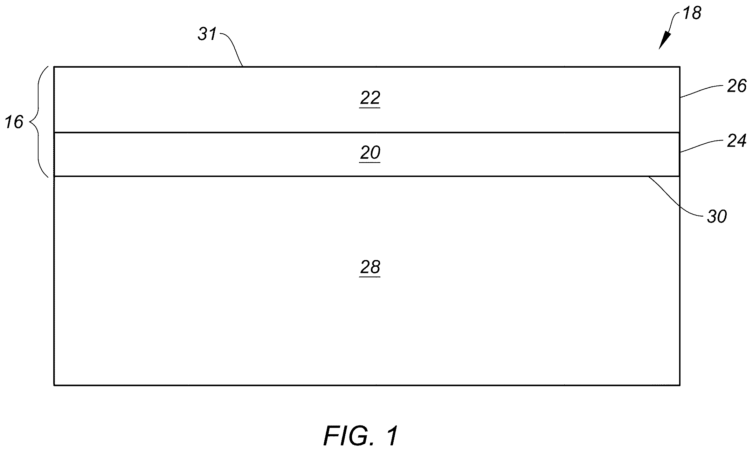

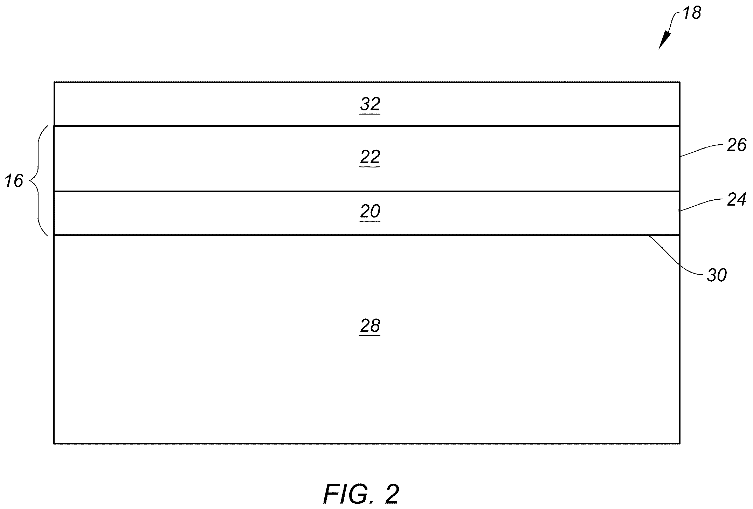

Referring to FIGS. 1 and 2, a dual-layer coating system 16 for an aircraft component 18 is described herein. The coating system 16 includes a diffusion barrier coating layer 20 and a bond coating layer 22. Diffusion barrier coating layer 20 includes a first MCrAlX alloy 24. Bond coating layer 22 includes a second MCrAlX alloy 26. The coating system 16 is used to coat any stationary component for an aircraft disposed within a hot section of a gas turbine engine (e.g., a combustor section, a turbine section or an exhaust section). Examples of the stationary component include, but are not limited to, a vane, a platform, a gas path wall, a liner and a shroud. The present disclosure, however, is not limited to stationary component applications. The aircraft component 18, for example, may alternatively be a rotor blade (e.g., a turbine blade). The aircraft component of the present disclosure is not limited to hot section engine components, and other engine components are not meant to be precluded.

Referring now to the exemplary embodiment of FIG. 1, the component 18 comprises a substrate 28, which may be a nickel-based, cobalt-based, iron-based superalloy substrate, or the like. In the exemplary embodiment, the substrate 28 comprises a nickel-based superalloy substrate having a low aluminum content (e.g., up to about 6.00 percent aluminum by weight). The coating system 16 is applied to a surface 30 of substrate 28. As illustrated, the diffusion barrier coating layer 20 is disposed on the surface 30 of the substrate 28 (e.g., contiguous with the substrate 28), and the bond coating layer 22 is disposed on the diffusion barrier coating layer 20 (e.g., contiguous with the diffusion barrier coating layer 20). The bond coating layer 22 includes an exterior surface 31 which may be disposed, for example, on a hot side of component 18, such that the bond coating layer 22 is the outmost layer of component 18. In some embodiments, the exterior surface 31 may be disposed on a cold side of the component.

Component 18 may include coating system 16 in combination with additional layers, such as a thermal barrier coating (TBC) layer 32. In the embodiment illustrated in FIG. 2, component 18 includes substrate 28, coating system 16 disposed on the surface 30 of the substrate 28, and TBC layer 32 disposed on the outmost layer of the coating system 16. As illustrated, diffusion barrier coating layer 20 is disposed on the surface 30 of the substrate 28 (e.g., contiguous with the substrate 28), the bond coating layer 22 is disposed on the diffusion barrier coating layer 20 (e.g., contiguous with the diffusion barrier coating layer 20), and the TBC layer 32 is disposed on the bond coating layer 22 (e.g., contiguous with the bond coating layer 22). As illustrated, TBC layer 32 is the outmost layer of component 18, which is disposed on the hot side of component 18.

The coating system 16 of the present disclosure includes a diffusion barrier coating layer 20 and a bond coating layer 22. The diffusion barrier coating layer 20 includes a γ/β microstructure. The bond coating layer 22 includes a γ/β microstructure. The diffusion barrier coating layer 20 preferably has a thickness from about 0.1 microns to about 50 microns, and more preferably a thickness from about 10 microns to about 30 microns. Other thicknesses of the diffusion barrier coating are not meant to be precluded. The bond coating layer 22 preferably has a thickness from about 50 microns to about 500 microns, and more preferably a thickness from about 100 microns to about 250 microns. Other thicknesses of the bond coating layer 22 are not meant to be precluded. In some embodiments, the diffusion barrier coating layer 20 comprises about twenty percent of the total thickness of the coating system 16. The diffusion barrier coating layer 20 includes a first MCrAlX alloy 24 and bond coating layer 22 includes a second MCrAlX alloy 26. The first MCrAlX alloy 24 and the second MCrAlX alloy 26 are generally superalloys that comprise cobalt, nickel, or combinations thereof.

The diffusion barrier coating layer 20 may comprise one or more layers of the first MCrAlX alloy 24, where M comprises cobalt, nickel, or combinations thereof, and X comprises yttrium. The diffusion barrier coating layer 20 may comprise, for example, a cobalt-based or cobalt-nickel-based MCrAlX alloy having a microstructure that includes gamma and beta phases (e.g., a γ/β microstructure) wherein, by weight of the alloy, M comprises cobalt in an amount of at least 35 percent and X comprises yttrium in an amount of about 0.35 percent to about 0.65 percent by weight of the alloy. The first MCrAlX alloy 24 may be formed from a cobalt-rich, moderate aluminum aluminide alloy. In one embodiment, the first MCrAlX alloy 24 comprises a composition, by weight of the alloy, from about 7.00 percent to about 9.00 percent aluminum. In another embodiment, the first MCrAlX alloy 24 comprises a composition, by weight of the alloy, from about 31.00 to about 33.00 percent nickel, from about 20.00 percent to about 22.00 percent chromium, from about 7.00 percent to about 9.00 percent aluminum, from about 0.35 percent to about 0.65 percent yttrium, and the balance cobalt. The incorporation of cobalt and aluminum in the amounts indicated above greatly improves the resistance of first MCrAlX alloy to hot corrosion. In addition, the incorporation of cobalt and aluminum in the amounts indicated above reduces interdiffusion of aluminum between the substrate 28, the diffusion barrier coating layer 20, and the bond coating layer 22.

The bond coating layer 22 may comprise one or more layers of the second MCrAlX alloy 26, where M includes nickel, cobalt, or combinations thereof, and where X comprises yttrium, and may optionally comprise silicon and hafnium. The bond coating layer 22 may comprise, for example, a nickel-based or nickel-cobalt-based MCrAlX alloy having a microstructure that includes gamma and beta phases (e.g., a γ/β microstructure) wherein, by weight of the alloy, M comprises nickel in an amount of at least 41 percent and X comprises yttrium in an amount of about 0.40 percent to about 0.80 percent by weight of the alloy. In one embodiment, the bond coating layer 22 is formed from a nickel-rich, aluminum-rich aluminide alloy. In one embodiment, the second MCrAlX alloy 26 includes aluminum in an amount, by weight of the alloy, from about 11.00 percent to about 13.50 percent aluminum, from about 11.75 percent to about 13.25 percent, or from about 11.80 percent to about 13.20 percent. In another embodiment, the second MCrAlX alloy 26 comprises, by weight of the alloy, from about 20.00 percent to about 24.00 percent cobalt, from about 15.00 percent to about 19.00 percent chromium, from about 11.80 percent to about 13.20 percent aluminum, from about 0.40 percent to about 0.80 percent yttrium, and the balance nickel. Alternatively, the second MCrAlX alloy 26 comprises by weight of the alloy, from about 20.00 percent to about 24.00 percent cobalt, from about 15.00 percent to about 19.00 percent chromium, from about 11.75 percent to about 13.25 percent aluminum, from about 0.40 percent to about 0.80 percent yttrium, from about 0.20 percent to about 0.60 percent silicon, from about 0.10 percent to about 0.40 percent hafnium, and the balance nickel. Optionally, the second MCrAlX alloy 26 described above may also include one or more of: carbon, phosphorous, sulfur, lead, bismuth, oxygen, nitrogen, and hydrogen. The second MCrAlX alloy 26 may therefore further comprise by weight of the alloy one or more of the following: up to about 0.02 percent carbon, up to about 0.01 percent phosphorous, up to about 0.01 percent sulfur, up to about 25 ppm lead, up to about 1ppm bismuth, up to about 400ppm oxygen, up to about 100ppm nitrogen, and up to about 50 ppm hydrogen.

Within the component 18, the compositional percentage of aluminum by weight may increase from the substrate 28 to the diffusion barrier coating layer 20 to the bond coating layer 22, thereby forming a concentration gradient (e.g., a shallow concentration gradient). For example, aluminum may be present, in an amount by weight, as follows: up to about 6.0 percent in the substrate 28, from about 7.0 percent to about 9.0 percent in the diffusion barrier coating layer 20, and from about 11.0 to about 13.0 percent in the bond coating layer 22. The component 18 may also include a TBC layer 32 disposed on the outmost layer of component 18 (See FIG. 2). Any suitable thermal barrier layer may be used, and the TBC layer 32 may have any suitable thickness.

Any of the diffusion barrier coating layer 20, the bond coating layer 22, and the TBC layer 32 may be applied using any suitable technique known in the art. Suitable application techniques include, but are not limited to low pressure plasma spray (LPPS), atmospheric plasma spray (APS), high velocity oxygen fuel (HVOF), high velocity air fuel (HVAF), physical vapor deposition (PVD), chemical vapor deposition (CVD), or the like. In some embodiment, application of the coating system 16 is followed by or done while heating the coating system 16 and/or the component 18 in a furnace (e.g., a vacuum furnace). The furnace is configured to receive the substrate 28 with the coating system 16 (e.g., the diffusion barrier coating layer 20 and the bond coating layer 22) and subject the substrate 28 and coating system 16 to a heat cycle, for example under vacuum and/or in a partial pressure inert gas (e.g., argon (Ar) gas) environment. During this heat cycle, the coating system 16 may form a diffusion bond to the substrate 28.

Typical nickel-based superalloy substrates including low compositional amounts of aluminum by weight (e.g., equal to or less than about 6.00 percent aluminum by weight) can reduce the oxidation and spallation life of convention metallic overlay coatings through diffusion of aluminum within the conventional metallic overlay coatings into the substrate. Notably, the diffusion of aluminum between conventional metallic overlay coatings and typical nickel-based superalloy substrates can produce losses, by weight of the metallic overlay coatings, of up to 50.00 percent aluminum. Since aluminum is the primary alloying element responsible for oxidation protection within metallic overlay coatings, the present disclosure mitigates aluminum-based diffusion of the bond coating layer 22 into the substrate 28 through the use of the cobalt-rich, moderate aluminum diffusion barrier coating layer 20 between the substrate 28 and the bond coating layer 22. The first MCrAlX alloy 24 of the diffusion barrier coating layer 20 advantageous exhibits low diffusivity and aluminum activity compared to typical nickel-based superalloy substrates, allowing the diffusion barrier coating layer 20 to therefore serve as an intermediate layer to prevent unwanted diffusion of aluminum between the bond coating layer 22 and the substrate 28. Further, the first MCrAlX alloy 24 of the diffusion barrier coating layer 20 advantageously provides a barrier to fatigue propagation from the bond coating layer 22, and additional hot corrosion resistance of substrate 28 in circumstances where the bond coating layer 22 is defeated. While not wishing to be bound by theory, it is also believed the γ/β microstructure of the first MCrAlX alloy 24 and the second MCrAlX alloy 26 further prevents cracking in the coating system 16 which could otherwise cause unwanted diffusion of oxygen between the bond coating layer 22 and the substrate 28.

The component 18 formed using the present disclosure coating system 16 therefore provides an aircraft component having low aluminum diffusivity between the substrate 28 and the coating system 16. In contrast to metallic overlay coatings that include platinum, rhenium, and other heavy metal constituents which must be plated, the present disclosure coating system 16 may be applied with ease using any of the thermal spray systems disclosed above, and utilizes readily available, low-cost materials.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible.

## Claims

1. An aircraft component (18), comprising:
a substrate (28) having a surface (30);
a diffusion barrier coating layer (20) disposed on the surface (30), the diffusion barrier coating layer (20) including a first γ/β microstructure; and
a bond coating layer (22) disposed on the diffusion barrier coating layer (20), the bond coating layer (22) including a second γ/β microstructure.

2. The aircraft component of claim 1, wherein the diffusion barrier coating layer (20) comprises a first MCrAlX alloy (24), wherein M comprises cobalt and X comprises yttrium.

3. The aircraft component of claim 2, wherein M of the first MCrAlX alloy (24) further comprises nickel.

4. The aircraft component of claim 2 or 3, wherein the bond coating layer (22) comprises a second MCrAlX alloy (26), wherein M of the second MCrAlX alloy (26) comprises nickel, and X of the second MCrAlX alloy (26) comprises one or more of: yttrium, silicon, or hafnium.

5. The aircraft component of claim 4, wherein M of the second MCrAlX alloy (26) further comprises cobalt.

6. The aircraft component of any of claims 2 to 5, wherein the first MCrAlX alloy (24) comprises, by weight of the first MCrAlX alloy (24), from about 7.00 percent to about 9.00 percent aluminum.

7. The aircraft component of any of claims 2 to 5, wherein the first MCrAlX alloy (24) comprises, by weight of the first MCrAlX alloy (24), from about 31.00 to about 33.00 percent nickel, from about 20.00 percent to about 22.00 percent chromium, from about 7.00 percent to about 9.00 percent aluminum, from about 0.35 percent to about 0.65 percent yttrium, and the balance cobalt.

8. The aircraft component of claim 4 or any of claims 5 to 7 as dependent on claim 4, wherein the second MCrAlX alloy (26) comprises, by weight of the second MCrAlX alloy (26), from about 11.00 percent to about 13.50 percent aluminum.

9. The aircraft component of claim 4 or any of claims 5 to 78 as dependent on claim 4, wherein the second MCrAlX alloy (26) comprises, by weight of the second MCrAlX alloy (26), from about 20.00 percent to about 24.00 percent cobalt, from about 15.00 percent to about 19.00 percent chromium, from about 11.80 percent to about 13.20 percent aluminum, X comprising from about 0.40 percent to about 0.80 percent yttrium, and the balance nickel, optionally wherein the second MCrAlX alloy (26) further comprises, by weight of the second MCrAlX alloy (26), one or more of: up to about 0.02 percent carbon, up to about 0.01 percent phosphorous, up to about 0.01 percent sulfur, up to about 25 ppm lead, up to about 1ppm bismuth, up to about 400ppm oxygen, up to about 100ppm nitrogen, or up to about 50 ppm hydrogen.

10. The aircraft component of claim 4 or any of claims 5 to 78 as dependent on claim 4, wherein the second MCrAlX alloy (26) comprises, by weight of the second MCrAlX alloy (26), from about 20.00 percent to about 24.00 percent cobalt, from about 15.00 percent to about 19.00 percent chromium, from about 11.75 percent to about 13.25 percent aluminum, from about 0.40 percent to about 0.80 percent yttrium, from about 0.20 percent to about 0.60 percent silicon, from about 0.10 percent to about 0.40 percent hafnium, and the balance nickel, optionally wherein the second MCrAlX alloy (26) further comprises, by weight of the second MCrAlX alloy (26), one or more of: up to about 0.02 percent carbon, up to about 0.01 percent phosphorous, up to about 0.01 percent sulfur, up to about 25 ppm lead, up to about 1ppm bismuth, up to about 400ppm oxygen, up to about 100ppm nitrogen, or up to about 50 ppm hydrogen.

11. The aircraft component of any preceding claim, further comprising a thermal barrier coating layer (32) disposed on the bond coating layer (22).

12. The aircraft component of any preceding claim, wherein the substrate (28) comprises a nickel-based superalloy.

13. The aircraft component of any preceding claim, wherein the substrate (28) comprises, by weight of the substrate, up to about 6.00 percent aluminum.

14. An aircraft component, comprising:
a substrate (28) having a surface (30), the substrate (28) comprising, by weight of the substrate (28), up to about 6.00 percent aluminum;
a diffusion barrier coating layer (20) disposed on the surface (30), the diffusion barrier coating layer (20) comprising a first MCrAlX alloy (24), wherein M comprises cobalt and X comprises yttrium, and the first MCrAlX alloy (24) comprising, by weight of the first MCrAlX alloy (24), from about 7.00 percent to about 9.00 percent aluminum; and
a bond coating layer (22) disposed on the diffusion barrier coating layer (20), the bond coating layer (22) comprising a second MCrAlX alloy (26), wherein M comprises nickel and X comprises one or more of yttrium, silicon, or hafnium, and the second MCrAlX alloy (26) comprising, by weight of the first MCrAlX alloy (24), from about 11.00 percent to about 13.00 percent aluminum,
optionally, wherein:
the first MCrAlX alloy (24) further comprises, by weight of the first MCrAlX alloy (24), from about 31.00 to about 33.00 percent nickel, from about 20.00 percent to about 22.00 percent chromium, from about 0.35 percent to about 0.65 percent yttrium, and the balance cobalt; and either:
the second MCrAlX alloy (26) further comprises, by weight of the second MCrAlX alloy (26), from about 20.00 percent to about 24.00 percent cobalt, from about 15.00 percent to about 19.00 percent chromium, from about 11.80 percent to about 13.20 percent aluminum, X comprising from about 0.40 percent to about 0.80 percent yttrium, and the balance nickel; or
the second MCrAlX alloy (26) further comprises, by weight of the second MCrAlX alloy (26), from about 20.00 percent to about 24.00 percent cobalt, from about 15.00 percent to about 19.00 percent chromium, from about 11.75 percent to about 13.25 percent aluminum, from about 0.40 percent to about 0.80 percent yttrium, from about 0.20 percent to about 0.60 percent silicon, from about 0.10 percent to about 0.40 percent hafnium, and the balance nickel.

15. A coating system (16) for an aircraft component (18), comprising:
a diffusion barrier coating layer (20) disposed adjacent a substrate (28), the diffusion barrier coating layer (20) including a first γ/β microstructure, and the diffusion barrier coating layer (20) comprising a first MCrAlX alloy (24), wherein M comprises cobalt and X comprises yttrium; and
a bond coating layer (22) disposed adjacent the diffusion barrier coating layer (20), the bond coating layer (22) including a second γ/β microstructure, and the bond coating layer (20) comprising a second MCrAlX alloy (26), wherein M of the second MCrAlX alloy (26) comprises nickel, and X of the second MCrAlX alloy (26) comprises one or more of yttrium, silicon, or hafnium, optionally wherein:
the first MCrAlX alloy (24) comprises, by weight of the first MCrAlX alloy (24), from about 7.00 percent to about 9.00 percent aluminum; and
the second MCrAlX alloy (26) comprises, by weight of the second MCrAlX alloy (26), from about 11.00 percent to about 13.00 percent aluminum.
